Europäisches Patentamt

European Patent Office

Office européen des brevets

(11) Veröffentlichungsnummer: **0 457 946 A1**

## EUROPÄISCHE PATENTANMELDUNG

(21) Anmeldenummer: 90109817.8

(51) Int. Cl.⁵: **G11B 27/17**

(22) Anmeldetag: 23.05.90

(43) Veröffentlichungstag der Anmeldung:
27.11.91 Patentblatt 91/48

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Glieden, Manfred**
**Niemöller Allee 13**
**W-8000 München(DE)**

(54) **Verfahren zur Bestimmung der Dicke und der Länge eines auf einem Spulenkörper aufgewickelten Bandes, insbesondere Magnetbandes.**

(57) Das Verfahren sieht vor, daß eine Steuereinrichtung in einem Meßlauf kurzzeitige Bandbewegungen mit beliebiger geregelter oder ungeregelter Geschwindigkeit steuert, dabei die Werte von mindestens zwei verschiedenen Wickelumfängen $u_1...U_n$ ermittelt, dazu eine Interpolationsgerade errechnet und dann die Länge $L_x$ des aufgewickelten Bandes nach einer angegebenen Rechenvorschrift bestimmt. Beim erfindungsgemäßen Verfahren ist von besonderem Vorteil, daß weder eine Information über die Gesamtlänge des Bandes noch eine Information über die Dicke des Bandes vorliegen muß.

EP 0 457 946 A1

Die Erfindung betrifft ein Verfahren zur Bestimmung der Dicke und der Länge eines auf einem Spulenkörper aufgewickelten Bandes, insbesondere Magnetbandes, nach dem Oberbegriff des Anspruches 1.

Im Bereich der elektronischen Datenverarbeitung sowie bei der Aufzeichnung von Bild- und/oder Toninformation werden Daten auf aufwickelbaren Magnetbändern gespeichert.

Bei der Verarbeitung dieser Daten wird das Band, z. B. ein Video- oder Tonband, zwischen einem ersten Spulenkörper (Aufwickelspule) und einem zweiten Spulenkörper (Abwickelspule) hin- und hergespult. Dabei kann es nützlich oder auch notwendig sein, die absolute Länge des auf einem oder beiden Spulenkörper aufgewickelten Bandes zu kennen. Eine solche Längeninformation wird beispielsweise zur Anzeige einer noch verfügbaren Restspielzeit, der abgelaufenen Spielzeit oder deren entsprechenden Bandlängen benutzt.

Aus der EP-A-0 063 646 ist bereits ein solches Verfahren zur Ermittlung und Anzeige der abgelaufenen Spielzeit bzw. Bandlänge und/oder der Restlaufzeit von Kassetten oder Spulen bandförmiger Informationsträger bekannt. Dabei wird während eines Meßlaufes das Band vom ersten Spulenkörper zum zweiten Spulenkörper umgespult und das Drehzahlverhältnis der beiden Spulenkörper ermittelt. Aus einer Bandkonstanten sowie dem Drehzahlverhältnis kann dann die Restspieldauer oder Bandlänge errechnet und angezeigt werden. Die Bandkonstante ist dabei durch den Durchmesser des Spulenkörpers, der Banddicke sowie der Bandlänge bestimmt. Diese Bandkonstante muß jedoch durch eine externe Abtastvorrichtung im Abspielgerät von einer an der Spule oder Kassette angeordneten Bandcodierung abgetastet werden.

Eine solche an der Kassette oder Spule angebrachte mechanische Bandcodierung ist aber hinsichtlich seines relativ hohen technischen Aufwandes für die Bereitstellung der Codierung auf der Spule oder Kassette und andererseits für das Ablesen der Bandcodierung nachteilig. Darüber hinaus müßte bei einer Manipulation der Bandlänge die Bandcodierung angepaßt werden. Dies ist jedoch kaum praktizierbar.

Der Erfindung liegt deshalb die Aufgabe zugrunde, ein Verfahren zur Bestimmung der Länge eines auf einem Spulenkörper aufgewickelten Bandes, insbesondere Magnetbandes anzugeben, das eine solche Bandcodierung nicht benötigt und daher die Bandlänge auch dann exakt ermittelt werden kann, wenn weder eine Information über die Gesamtlänge des Bandes noch eine Information über die Dicke des Bandes direkt oder indirekt vorgegeben ist.

Diese Aufgabe wird durch die kennzeichnenden Merkmale des Anspruchs 1 gelöst.

Das erfindungsgemäße Verfahren besteht also im wesentlichen darin, daß eine Steuereinrichtung bestimmte kurzfristige Bandbewegungen mit beliebiger geregelter oder ungeregelter Geschwindigkeit steuert, dabei die Werte von mindestens zwei verschiedenen Wickelumfängen ermittelt, dazu die Interpolationsgerade errechnet und schließlich die Länge des aufgewickelten Bandes nach der angegebenen Rechenvorschrift im Anspruch 1 bestimmt.

Das erfindungsgemäße Verfahren gilt sowohl für die Aufwickelals auch Abwickelspule gleichermaßen, sofern jeweils ein eigener Spulentacho vorhanden ist, der pro Umdrehung mindestens einen Impuls abgibt. Es kann jeweils die Bandlänge auf derjenigen Wickelspule ermittelt werden, die mit einem solchen Tacho ausgestattet ist, unabhängig davon, ob die andere Wickelspule einen Tacho aufweist.

Vorteilhaft ist, daß im Vergleich zu den bisher bekannt gewordenen Verfahren, die bei der Bandlängenberechnung vom Wickelverhältnis der beiden Wickelspulen ausgehen und daher zwangsläufig ein Bandlaufwerk voraussetzen, das mit je einem Tacho an Auf- und Abwickelspule ausgestattet ist, der technische Aufwand erheblich reduziert ist. Zur Bandvorschubkontrolle ist ein einziger Spulentacho ausreichend. Das erfindungsgemäße Verfahren gestattet eine Ermittlung der Gesamtlänge bzw. Gesamtspielzeit des Bandes also auch dann, wenn nur ein einziger Spulentacho vorhanden ist. In diesem Fall muß zur Ermittlung der Gesamtlänge das Band vollständig auf den mit dem Tacho ausgestatteten Spulenkörper aufgewickelt werden.

Nachdem die Bandlänge auf einem oder jedem Spulenkörper ermittelt wurde, kann die Steuereinrichtung diese Bandlänge in Restspielzeit und/oder abgelaufene Spielzeit, bezogen auf normale Wiedergabe in Stunden und Minuten umrechnen, und auf einer Anzeigeneinrichtung anzeigen.

Vorteilhaft beim erfindungsgemäßen Verfahren ist, daß nach dem Einlegen einer Kassette, von der weder die momentane Bandposition noch irgendwelche Bandkonstanten bekannt sind, die Steuereinrichtung durch mindestens zweimaliges Umdrehen der Auf- und Abwickelspule innerhalb weniger Sekunden die abgelaufene Spielzeit und die Restspielzeit anzeigen kann. Dabei benötigt die Steuereinrichtung nur die Signale von maximal drei Tachometern, die mit der Capstanwelle und den beiden Spulenkörpern in Verbindung stehen.

Die Erfindung wird im folgenden anhand von sechs Figuren am Beispiel einer Tonkassette im Zusammenhang näher erläutert.

Es zeigen:

FIG 1    eine schematische Darstellung einer Tonkassette,

FIG 2    eine schematische Darstellung einer Vorrichtung zur Durchführung des Verfahrens,

FIG 3    ein Zeitdiagramm von Taktimpulsen nach dem erfindungsgemäßen Verfahren bei einem schnellen geregelten Bandvorschub,

FIG 4    ein Zeitdiagramm von Taktimpulsen bei einem schnellen ungeregelten Bandvorschub,

FIG 5    eine zu zwei ermittelten äußeren Wickelumfängen gehörende Interpolationsgerade und

FIG 6    eine zu sieben ermittelten äußeren Wickelumfängen gehörende Interpolationsgerade.

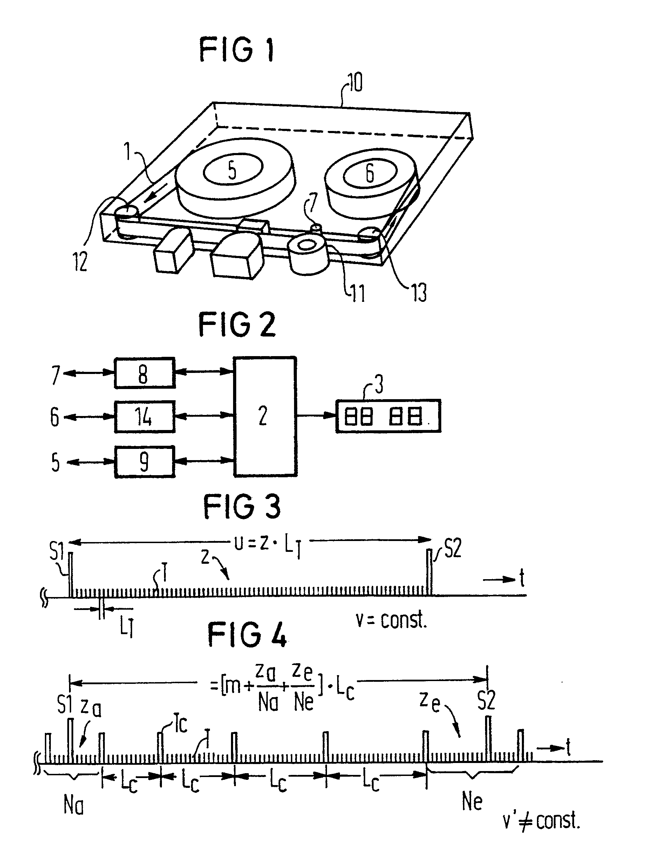

FIG 1 zeigt beispielhaft eine Tonbandkassette 10, mit einem auf zwei Spulenkörper 5, 6 (Auf- und Abwickelspule) aufgewickelten Tonband 1. Der Bandvorschub des Tonbandes 1 erfolgt über eine im Abspielgerät angeordnete rotierende Capstanwelle 7, an die das Band 1 durch eine Andruckrolle 11 gefügt wird. Das Band 1 wird in der Kassette 10 über zwei Umlenkrollen 12 und 13 geführt.

Gesteuert wird der Bandvorschub über eine in FIG 2 dargestellte Steuereinrichtung 2, an die ein mit der Capstanwelle 7 verbundener Capstan-Tacho 8, ein mit dem ersten Spulenkörper 5 verbundener erster Wickeltacho 9 sowie ein mit dem zweiten Spulenkörper 6 verbundener zweiter Wickeltacho 14 ange-schlossen ist. Die Steuereinrichtung 2 steuert darüber hinaus eine Anzeigeeinrichtung 3 zur Bandlängenanzeige.

Die Rotation der Capstanwelle 7 und somit auch der Bandvorschub ist von Impulsen des Capstan-Tachos 8 begleitet. Diese Capstan-Impulse werden zur Regelung der Bandvorschubgeschwindigkeit in der Steuereinrichtung 2 verwendet. Zusätzlich stehen weitere Impulse zur Verfügung, die von beiden oder mindestens einem Spulenkörperantrieb und dem dazugehörigen Spulentacho 9, 14 bereitgestellt werden. Diese weiteren Impulse dienen zur Überwachung des Wickelvorganges.

Um die Bandlänge beispielsweise auf dem ersten Spulenkörper 5 ermitteln zu können, führt die Steuereinrichtung 2 einen Meßlauf in Form einer kurzfristigen Bandbewegung aus, wobei mindestens zwei Werte für verschiedene äußere Wickelumfänge auf dem ersten Spulenkörper 5 bestimmt werden müssen. Der Wert für einen Wickelumfang kann auf zwei verschiedene Methoden bestimmt werden, wobei jeweils von der Steuereinrichtung 2 ein im Vergleich zu den Capstan-Impulsen höherfrequentes Taktsignal bereitgestellt werden muß.

Bei der ersten in FIG 3 anhand eines dazugehörigen Impulsdiagramms prinzipiell dargestellten Methode erzeugt die Steuereinrichtung 2 einen schnellen geregelten Bandvorschub, also einen Bandvorschub mit konstanter Geschwindigkeit v. Dabei wird die Anzahl z der durch das höherfrequente Taktsignal T bestimmten Taktzyklen erfaßt, die genau einer Wickelumdrehung entsprechen. Vom Spulentacho 9 des ersten Spulenkörpers 5 wird zusätzlich ein erstes Signal S1 als Startsignal und ein zweites Signal S2 als Stoppsignal für diese Umdrehung geliefert. Der äußere Wickelumfang u wird durch die Steuereinrichtung 2 gemäß der Rechenvorschrift

$$u = z \cdot L_T$$

bestimmt, wobei $L_T$ die Länge eines Bandstückes darstellt, das bei der gewählten Bandvorschubgeschwindigkeit v genau einem Taktzyklus des höherfrequenten Taktsignales T entspricht.

Nach der zweiten Methode wird von der Steuereinrichtung 2 ein ungeregelter schneller Bandvorschub erzeugt. Die Bandvorschubgeschwindigkeit v' muß dabei nicht konstant sein. Gemäß der Erfindung wird die Anzahl m der vollen Capstan-Impulse $T_c$ erfaßt, die genau einer Wickelumdrehung entsprechen. Das dazugehörende Zeitdiagramm zeigt FIG 4. Als Start-und Stoppsignal wird von dem zum Spulenkörper gehörenden Spulentacho wieder ein erstes Signal S1 und ein zweites Signal S2 bereitgestellt. Um die Genauigkeit bei der Ermittlung des äußeren Wickelumfanges zu erhöhen, können auch die Bruchteile von Capstan-Impulsen $T_c$ erfaßt werden, die zeitlich am ersten Signal S1 und zweiten Signal S2 anfallen. Diese Bruchteile werden mit Hilfe des oben bereits erwähnten höherfrequenten Taktsignales durch die Steuer-richtung 2 erfaßt. Dazu ermittelt die Steuereinrichtung 2 folgende Werte:

$N_a$ = Zahl der Taktzyklen des höherfrequenten Taktsignales T, die zwischen den beiden Capstan-Impulsen $T_c$ liegen, zwischen denen auch das Signal S1 liegt,

$z_a$ = Zahl der Taktzyklen des höherfrequenten Taktes T, die zwischen dem ersten Signal S1 und dem ersten Capstan-Impuls $T_c$ nach dem Signal S1 liegen,

$N_e$ = Zahl der Taktzyklen des höherfrequenten Taktes T, die zwischen den beiden Capstan-Impulsen $T_c$ liegen, zwischen denen auch das Signal S2 liegt,

$z_e$ = Zahl der Taktzyklen des höherfrequenten Taktes T, die zwischen dem letzten Capstan-Impuls $T_c$ vor dem zweiten Signal S2 und dem Signal S2 liegen.

Der fixe Bandvorschub, der durch zwei aufeinanderfolgende Capstan-Impulse $T_c$ bestimmt ist, sei mit $L_c$ bezeichnet. Die Steuereinrichtung 2 bestimmt dann den äußeren Wickelumfang u durch folgende Rechen-

vorschrift:

$$u = \left( m + \frac{z_a}{N_a} + \frac{z_e}{N_e} \right) \cdot L_c$$

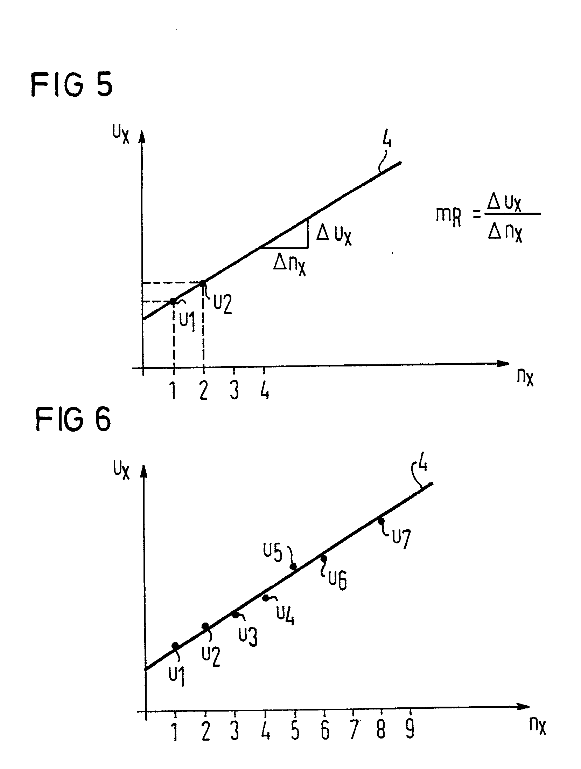

Sind schließlich mindestens zwei verschiedene Wickelumfänge $u_1$, $u_2$... $u_n$ nach einer der beiden Methoden bestimmt worden, so muß die Steuereinrichtung 2 gemäß der Erfindung eine dazu passende Interpolationsgerade errechnen, also eine Anpassungsgerade mit minimaler quadratischer Abweichung zu den n Wertepaaren $(n_1, u_1)$...$(n_n, u_n)$ mit $n_1$...$n_n$ = Zahl der Wickelumdrehungen zu den äußeren Wickelumfängen $u_1$...$U_n$ bezogen auf eine beliebige aber fixe Wickelposition. Werden nur zwei äußere Wickelumfänge $u_1$, $u_2$ ermittelt und in einem Diagramm nach FIG 5 eingezeichnet, bei dem $n_x$ die relative Anzahl der Umdrehungen bezogen auf eine bestimmte Bandposition und $u_x$ die dazu gehörenden äußeren Wickelumfänge bezeichnet, so ist die Interpolationsgerade einfach durch die Verbindung dieser beiden Punkte bestimmt. Bei mehreren ermittelten äußeren Wickelumfängen muß die Interpolationsgerade an die gegebenen Werte so angenähert werden, daß vorteilhafterweise die quadratische Abweichung der einzelnen Punkte zur Interpolationsgeraden minimal wird. FIG 6 zeigt dies beispielhaft für sieben ermittelte Wickelumfänge $u_1$, $u_2$, $u_3$, $u_4$, $u_5$, $u_6$ und $u_7$.

Die Länge $L_x$ des auf dem ersten Spulenkörper 5 aufgewickelten Bandes 1 wird in der Steuereinrichtung 2 schließlich nach der Formel

$$L_x = \frac{1}{2 \cdot m_R} \cdot (u_x{}^2 - U_S{}^2)$$

wobei bedeuten:

$L_x$ = Länge des Bandes (1) auf dem Spulenkörper beim Wickelumfang $u_x$

$m_R$ = Steigung der Interpolationsgeraden zu den Werten $u_1$...$u_n$,

$u_x$ = Wert an der Stelle x der ermittelten Interpolationsgeraden

$U_S$ = vorgegebener Umfang des entsprechenden Spulenkörpers.

In grober Näherung kann die Steigung der Interpolationsgeraden $m_R$ auch nach der Formel

$$m_R = \frac{u_n - U_1}{n_n - n_1}$$

gesetzt werden.

Die Steuereinrichtung 2 errechnet zusätzlich einen Anpassungswert $u_x$, der auf der Interpolationsgeraden liegt und zu einem erfaßten äußeren Wickelumfang gehört, z. B. zu $u_1$. Mit den Werten $m_R$ und $u_x$, der beispielsweise zum ersten ermittelten äußeren Mittelumfang $u_1$ gehört, errechnet die Steuereinrichtung 2 dann nach der oben angegebenen Rechenvorschrift die Länge $L_1$, des Bandes 1, die zu dem äußeren Wickelumfang $u_1$ gehört.

Entsprechend einer Weiterbildung des erfindungsgemäßen Verfahrens kann die Länge des Bandes 1 aus der Anzahl der Wickelumdrehungen aktualisiert werden. Dazu bestimmt die Steuereinrichtung 2 die Banddicke $d_B$ entsprechend der Formel

$$d_B = \frac{m_R}{2 \cdot \pi}$$

Nachdem unmittelbar nach dem Einschieben der Kassette der äußere Wickelumfang $u_0$ eines Spulenkörpers und die Banddicke $d_B$ einmal ermittelt wurde, werden bei allen folgenden Bandbewegungen die Umdrehungen $n_x$ dieses Spulenkörpers mit Hilfe des dazugehörenden Spulentachos und dessen Impulse mitgezählt.

Daraus errechnet die Steuereinrichtung 2 den jeweils aktuellen äußeren Wickelumfang $u_a$ gemäß

$$u_a = u_0 +/- n_x \cdot 2 \cdot \pi \cdot d_B$$

wobei das Pluszeichen gilt, wenn auf den Spulenkörper aufgewickelt wird und das Minuszeichen gilt, wenn vom Spulenkörper abgewickelt wird.

Aus dem so ermittelten aktuellen äußeren Wickelumfang $u_a$ kann dann in einfacher Weise die Steuereinrichtung 2 nach oben angegegebenen Rechenvorschrift die zugehörige Länge $L_x$ des Bandes errechnen, wenn $u_x = u_a$ gesetzt wird.

Dies ermöglicht die Bandlängenverfolgung auf einfache Art und auch während Bandbewegungen mit nicht konstanter Geschwindigkeit, wie z. B. schnellem Vor- oder Rücklauf, indem die oben beschriebene Aktualisierung des äußeren Wickelumfanges $u_a$ einer der beiden Spulenkörper fortgesetzt wird und mit $u_x = u_a$ nach der Rechenvorschrift die Länge $L_x$ des Bandes errechnet wird.

Die Bandlänge des anderen Spulenkörpers muß nicht mitverfolgt werden, weil diese durch einfache Differenzbildung aus der einmal ermittelten Gesamtlänge des Bandes errechnet werden kann.

Sollte die Gesamtlänge des Bandes noch nicht bekannt sein, z. B. deswegen nicht, weil nur ein einziger Spulentacho für einen Spulenkörper vorgesehen ist, so ergibt sich die Gesamtlänge des Bandes beim Umspulen in dem Moment, in dem das gesamte Band auf dem Spulenkörper mit dem Wickeltacho aufgewickelt wurde.

Nachdem die Länge $L_x$ des Bandes auf einem oder jedem Spulenkörper 5, 6 ermittelt wurde, kann die Steuereinrichtung diese in Restspielzeit und/oder abgelaufene Spielzeit, bezogen auf normale Abspielzeit in Stunden und Minuten umrechnen und auf der Anzeigeneinrichtung 3 darstellen.

Besonders vorteilhaft bei dem erfindungsgemäßen Verfahren ist die Tatsache, daß der Steuereinrichtung 2 für die Erfassung der äußeren Wickelumfänge sowie der Banddickenbestimmung keine andere Information als die von den ohnehin im Abspielgerät vorhandenen Capstan-Tacho sowie dem oder den Wickeltacho(s) benötigt.

## Patentansprüche

1. Verfahren zur Bestimmung der Länge eines auf einem Spulenkörper (5, 6) aufgewickelten Bandes (1), insbesondere Magnetbandes, nach Maßgabe eines von einer Steuereinrichtung (2) gesteuerten Meßlaufes mit beliebiger Bandgeschwindigkeit,
   **dadurch gekennzeichnet,**
   daß während des Meßlaufes über eine kurzzeitige von der Steuereinrichtung (2) gesteuerten Bandbewegung mindestens zwei ($n \geq 2$) Werte für verschiedene äußere Wickelumfänge ($u_1, u_2 \dots u_n$) ermittelt werden, daß die Steuereinrichtung (2) zu diesen Werten eine Interpolationsgerade (4) ermittelt und daß die Länge $L_x$ des aufgewickelten Bandes (1) durch die Steuereinrichtung (2) gemäß der Formel

$$L_X = \frac{1}{2 \cdot m_R} \cdot (u_X{}^2 - U_S{}^2)$$

   ermittelt und über eine
   Anzeigeeinrichtung (3) angezeigt wird und wobei bedeuten:

   $L_X$ = Länge des Bandes (1) auf dem Spulenkörper (5, 6) beim Wickelumfang $u_X$,
   $m_R$ = Steigung der Interpolationsgeraden zu den Werten $U_1 \dots U_n$,
   $u_X$ = Wert für den Wickelumfang an der Stelle x der ermittelten Interpolationsgeraden,
   $U_S$ = vorgegebener Umfang des Spulenkörpers

2. Verfahren nach Anspruch 1,
   **dadurch gekennzeichnet,**
   daß die Steigung $m_R$ der Interpolationsgeraden durch die Formel

$$m_R = \frac{u_n - u_1}{(n_n - n_1)}$$

bestimmt wird, wobei $n_n$ und $n_1$ die relative Anzahl von Wickelumdrehungen zu den Wickelumfängen $u_n$ und $u_1$ bezogen auf eine bestimmte, willkürlich gewählte aber fixe Wickelposition sind.

3. Verfahren nach Anspruch 1 oder 2,
**dadurch gekennzeichnet,**
daß zur Ermittlung jedes äußeren Wickelumfangs ($u_1...u_n$) das Band (1) mit einer konstanten Geschwindigkeit (v) solange bewegt wird, bis eine volle Umdrehung des Spulenkörpers (5, 6) ausgeführt ist, wobei die Steuereinrichtung (2) ein im Vergleich zu Taktimpulsen ($T_c$) einer Capstanwelle (7) höherfrequentes Taktsignal (T) erzeugt und die Anzahl (z) der auf diese Umdrehung entfallenden Taktzyklen (T) erfaßt und mit der Länge ($L_T$) des Bandstückes multipliziert wird, das bei der vorgegebenen konstanten Geschwindigkeit (v) einem Taktzyklus (T) entspricht.

4. Verfahren nach Anspruch 1 oder 2,
**dadurch gekennzeichnet,**
daß zur Ermittlung jedes äußeren Wickelumfanges ($u_1...u_n$) das Band (1) mit einer ungeregelten Geschwindigkeit (v') solange bewegt wird, bis eine volle Umdrehung des Spulenkörpers (5, 6) ausgeführt ist, wobei eine Anzahl (m) von vollen Taktzyklen aus Taktimpulsen ($T_c$) eines mit einer Capstanwelle (7) verbundenen Capstan-Tachos (8) erfaßt werden, die einer vollen Umdrehung des Spulenkörpers (5, 6) entsprechen und diese Anzahl (m) mit der Länge ($L_c$) des Bandstückes multipliziert wird, das der Bandvorschublänge eines solchen Taktzyklus ($T_c$) entspricht.

5. Verfahren nach Anspruch 4,
**dadurch gekennzeichnet,**
daß die Steuereinrichtung (2) ein im Vergleich zu den Taktimpulsen ($T_c$) der Capstanwelle (7) höherfrequentes Taktsignal (T) erzeugt, daß ein mit dem Spulenkörper (5, 6) verbundener Spulentacho (9, 10) zu Beginn der vollen Umdrehung ein erstes Signal (S1) und am Ende der vollen Umdrehung ein zweites Signal (S2) bereitstellt, und der Wickelumfang $u_n$ gemäß der Formel

$$u_n = \left( m + \frac{z_a}{N_a} + \frac{z_e}{N_e} \right) \cdot L_c$$

bestimmt wird, wobei

$z_a =$ Zahl der Taktzyklen des höherfrequenten Taktes (T), die auf die Zeit zwischen dem ersten Signal (S1) und dem nächsten Taktimpuls ($T_c$) des Capstan-Tachos (8) entfallen,

$N_a =$ Zahl der Taktzyklen, die zwischen zwei Impulsen ($T_c$) des Capstan-Tachos (8) liegen, die sich in unmittelbarer zeitlicher Nähe des ersten Signals (S1) befinden,

$z_e =$ Zahl der Taktzyklen, die zwischen dem letzten Taktimpuls ($T_c$) des Capstan-Tachos (8) und dem zweiten Signal (S2) liegen, und

$N_e =$ Zahl der Taktzyklen, die zwischen zwei Impulsen ($T_c$) des Capstan-Tachos liegen, welche sich in unmittelbarer zeitlicher Nähe zum zweiten Signal (S2) befinden.

$m =$ Anzahl von vollen Taktzyklen aus Taktimpulsen ($T_c$)

6. Verfahren nach einem der Ansprüche 1 bis 5,
**dadurch gekennzeichnet,**
daß zur Aktualisierung der Länge $L_x$ des Bandes (1) zusätzlich die Banddicke $d_B$ gemäß

$$d_B = \frac{m_R}{2 \cdot \pi}$$

ermittelt wird.

7. Verfahren nach Anspruch 6,
   **dadurch gekennzeichnet,**
   daß, bei bekanntem Wickelumfang $u_\varnothing$ zu einer gegebenen Wickelposition WP$\varnothing$, zur Aktualisierung der Länge $L_x$ des Bandes (1) die Anzahl ($n_x$) der Umdrehungen des Spulenkörpers (5, 6) aus der Wickelposition WP$\varnothing$ heraus bei sich bewegendem Band (1) erfaßt wird, daraus der aktuelle Wickelumfang ($u_a$) in der Steuereinrichtung (2) gemäß

$$u_a = u_\varnothing + n_x \cdot 2 \cdot \pi \cdot d_B$$

ermittelt wird, wenn das Band (1) auf den Spulenkörper (5, 6) aufgewickelt wird und entsprechend

$$u_a = u_\varnothing - n_x \cdot 2 \cdot \pi \cdot d_B$$

wenn das Band (1) vom Spulenkörper (5, 6) abgewickelt wird und schließlich mit $U_x = U_y$ und gemäß der Formel in Anspruch 1 die aktuelle Länge $L_x$ zur aktuellen Wickelposition berechnet wird.

8. Verfahren nach einem der Ansprüche 1 bis 7,
   **dadurch gekennzeichnet,**
   daß das Band (1) insbesondere in einer Kassetteneinrichtung (10) von einem ersten Spulenkörper (5) auf einen zweiten Spulenkörper (6) gewickelt wird.

9. Verwendung des Verfahrens nach einem der Ansprüche 1 bis 8, in einem Gerät zum Abspielen von Magnetbändern.

# FIG 1

# FIG 2

# FIG 3

$$U = z \cdot L_T$$

$$v = \text{const.}$$

# FIG 4

$$= [m + \frac{z_a}{N_a} + \frac{z_e}{N_e}] \cdot L_c$$

$$v' \neq \text{const.}$$

# FIG 5

$$m_R = \frac{\Delta u_X}{\Delta n_X}$$

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 216 260 (STANDARD ELEKTRIK LORENZ A.G.) <br> * das ganze Dokument * <br> - - - | 1,3,4,6-9 | G 11 B 27/17 |
| A | EP-A-0 306 274 (K.K.TOSHIBA) <br> * das ganze Dokument * <br> - - - | 1,3,4,8,9 | |
| A | US-A-4 217 615 (SUZUKI) <br> * das ganze Dokument * <br> - - - | 1,3,6,8,9 | |
| A | DE-A-3 504 311 (DEUTSCHE THOMSON-BRANDT GMBH) <br> * das ganze Dokument * <br> - - - | 1,3,6-9 | |
| A | DE-A-3 622 893 (DEUTSCHE THOMSON-BRANDT GMBH) <br> * das ganze Dokument * <br> - - - | 1,3,6-9 | |
| A | FR-A-2 425 699 (SONY CORPORATION) <br> * Seite 15, Zeile 6 - Seite 18, Zeile 37 * <br> - - - | 1-3,8,9 | |
| A,D | EP-A-0 063 646 (GRUNDIG E.M.V.) <br> * das ganze Dokument * <br> - - - - - | 1,8,9 | RECHERCHIERTE SACHGEBIETE (Int. Cl.5) <br><br> G 11 B |

Der vorliegende Recherchenbericht wurde für alle Patentansprüche erstellt

| Recherchenort | Abschlußdatum der Recherche | Prüfer |
|---|---|---|
| Den Haag | 30 November 90 | DAALMANS F.J. |